(19)

Europäisches Patentamt
European Patent Office
Office européen des brevets

(11) **EP 4 614 131 A1**

(12) **EUROPEAN PATENT APPLICATION**
published in accordance with Art. 153(4) EPC

(43) Date of publication:
**10.09.2025  Bulletin 2025/37**

(21) Application number: 24887668.2

(22) Date of filing: **27.09.2024**

(51) International Patent Classification (IPC):
*G01N 3/08* (2006.01)          *G01N 3/06* (2006.01)
*G01N 1/28* (2006.01)

(86) International application number:
**PCT/CN2024/122055**

(87) International publication number:
**WO 2025/098050 (15.05.2025 Gazette 2025/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **01.12.2023   CN 202311632916**

(71) Applicants:
  • **Suzhou Nuclear Power Research Institute Co.,
    Ltd.**
    **Suzhou, Jiangsu 215004 (CN)**
  • **Ling Ao Nuclear Power Co., Ltd.**
    **Shenzhen, Guangdong 518120 (CN)**

(72) Inventors:
  • **QI, Shuang**
    **Suzhou, Jiangsu 215004 (CN)**
  • **AN, Yinghui**
    **Suzhou, Jiangsu 215004 (CN)**

  • **HUANG, Ping**
    **Suzhou, Jiangsu 215004 (CN)**
  • **JIANG, Guannan**
    **Suzhou, Jiangsu 215004 (CN)**
  • **FAN, Minyu**
    **Suzhou, Jiangsu 215004 (CN)**
  • **FANG, Kuiyuan**
    **Suzhou, Jiangsu 215004 (CN)**
  • **QIAN, Wangjie**
    **Suzhou, Jiangsu 215004 (CN)**
  • **CAI, Kexin**
    **Suzhou, Jiangsu 215004 (CN)**
  • **WANG, Chunhui**
    **Suzhou, Jiangsu 215004 (CN)**
  • **ZHANG, Yanwei**
    **Suzhou, Jiangsu 215004 (CN)**

(74) Representative: **Westphal, Mussgnug  & Partner,
Patentanwälte mbB
Werinherstraße 79
81541 München (DE)**

(54)   **TESTING METHOD FOR OBTAINING MATERIAL FRACTURE PROPERTIES BASED ON
0.5T-CT SPECIMEN RECONSTITUTION TECHNOLOGY**

(57)   The present invention relates to the technical field of mechanical property testing of metal materials, and in particular to a testing method for obtaining material fracture properties based on 0.5T-CT specimen reconstitution technology. The testing method for obtaining material fracture properties based on 0.5T-CT specimen reconstitution technology comprises: preparing an original 0.5T-CT specimen of a base material, and carrying out a fracture property test to obtain a residual 0.5T-CT specimen after the test:testing and analyzing the base material to obtain a full-range equivalent stress-strain relation curve of the base material; determining the range of materials that can be used for preparing a reconstituted specimen; welding a reusable material and an auxiliary material for specimen reconstitution to obtain a reconstituted 0.5T-CT specimen: testing and analyzing a weld material to obtain a stress-strain relation curve of the weld material; determining fracture parameters of the reconstituted 0.5T-CT specimen; and on the basis of the fracture parameters, carrying out a fracture toughness test of the reconstituted 0.5T-CT specimen to obtain fracture properties of the base material and/or the weld material. The testing method in the present invention is simple, and the testing result is accurate.

EP 4 614 131 A1

FIG. 1

**Description**

## TECHNICAL FIELD

The present invention belongs to the technical field of mechanical property test for metallic materials, and particularly relates to a testing method for obtaining material fracture property based on 0.5T-CT specimen reconstruction technology.

## BACKGROUND

To monitor the degree of neutron irradiation embrittlement of the reactor pressure vessel (RPV) of a nuclear power plant, RPV irradiation surveillance samples are placed near the RPV interior. These samples are periodically extracted to full-process hot cell tests, to obtain fracture toughness of the RPV material, enabling the assessment of the life of the RPV against rapid brittle fracture and the determination of the P-T curve (pressure-temperature limit curve) for RPV startup, shutdown, water pressure test and normal operation. This is critical for nuclear power plants and is highly valued by the industry.

However, during the renewal phase of the nuclear power plant operating license, there may be a problem of insufficient surveillance samples. Therefore, in order to solve the practical engineering problem of insufficient samples, it is attempted to put the residual samples of the used surveillance samples back into the reactor pressure vessel for continued irradiation, and to take out these residual samples when necessary and reconstruct them into new surveillance samples for reuse.

The specimen reconstruction technology can effectively utilize limited irradiated surveillance materials to obtain fracture toughness data of materials corresponding to longer service life. For example, Chinese invention patent CN201410060019.5 discloses a method for determining the minimum insertion segment size in Charpy impact specimen reconstruction technology. However, the method for preparing Charpy impact reconstruction specimens and determining the property of reconstructed specimens proposed in the patent are only applicable to Charpy specimens for obtaining impact properties, and cannot be applied to compact tensile specimens. For example, Chinese invention patent CN202210846785.9 discloses a method for preparing a reconstructed compact tensile specimen. The patent proposes to obtain the insertion segment range based on DIC technology and proposes a new method for preparing specimens, but does not mention the selection of welding parameters and the method for obtaining the fracture parameters of the reconstructed specimen.

## SUMMARY

In view of the defects in the related art, the purpose of the present invention is to provide a testing method for obtaining material fracture property based on 0.5T-CT specimen reconstruction technology.

In order to achieve the above purpose, the technical solution adopted by the present invention is:

A testing method for obtaining material fracture property based on 0.5T-CT specimen reconstruction technology, includes the following steps:

preparing a 0.5T-CT original specimen from parent material, conducting fracture property test to obtain tested 0.5T-CT specimen remnant;

performing testing analysis on the full-process equivalent stress-strain relation curve of proportional stretching-yielding-hardening-necking-fracture of the parent material to determine the full-process equivalent stress-strain relation curve;

calculating size of plastic zone at crack tip of the specimen remnant to determine the range of the material available for preparing reconstructed specimen;

cutting non-plastic deformation zones on both sides of the specimen remnant to form reusable material, performing specimen reconstruction with the reusable material and auxiliary material through welding to obtain 0.5T-CT reconstructed specimen;

conducting testing analysis of stress-strain relation curve on weld material to obtain stress-strain relation curve of weld material;

determining fracture parameters of 0.5T-CT reconstructed specimen based on the full-process equivalent stress-strain relation curve and the stress-strain relation curve of weld material;

performing fracture toughness test on 0.5T-CT reconstructed specimen based on the fracture parameters to obtain fracture property of the parent material and/or the weld material.

According to some preferred embodiment aspects of the present invention, during testing analysis of the full-process equivalent stress-strain relation curve of parent material, the full-process equivalent stress-strain relation curve is iterated combined with finite element iterative analysis method, until the tensile specimen load-displacement curve obtained through the full-process equivalent stress-strain relation curve combined with finite element iterative analysis method coincides with the curve obtained by tensile test, thereby determining the full-process equivalent stress-strain curve.

Specifically, in some embodiments, the stress-strain relationship of the material obtained based on uniaxial tensile test is input into the finite element as an initial constitutive relationship, and the load-displacement relationship of the funnel specimen is calculated, and it is iterated with the load-displacement relationship of the funnel specimen obtained in the test; the input stress-strain relationship is further updated until the load-displacement relationship of the funnel specimen obtained based on the finite element calculation basically coincides with the load-displacement relationship obtained in the test, at which time the input stress-strain relationship is the full-process equivalent stress-strain relationship of the material.

According to some preferred embodiment aspects of the present invention, during calculating size of plastic zone at crack tip of 0.5T-CT original specimen, the determined full-process equivalent stress-strain curve is finite element input as constitutive relationship of the parent material.

According to some preferred embodiment aspects of the present invention, when determining the range of the material available for preparing reconstructed specimen, the full-process equivalent stress-strain curve obtained through finite element iterative analysis method is used to calculate precise position and size of non-plastic deformation zones for preparing 0.5T-CT reconstructed specimen.

According to some preferred embodiment aspects of the present invention, the welding is electron beam welding, an arc initiation point during welding process is located outside reusable material area. In some embodiments, the welding parameters are: acceleration voltage is 140-160 kV, focusing current is 1200-1400 mA; welding current is 10-25 mA; welding speed is 900-1100 mm/min. Preferably, the acceleration voltage is 150 kV, the focusing current is 1300 mA, the welding current is 10-25 mA, and the welding speed is 1000 mm/min.

According to some preferred embodiment aspects of the present invention, a total width of the weld and heat-affected zone is about 2.376 mm.

According to some preferred embodiment aspects of the present invention, the auxiliary material is identical type material as the parent material.

According to some preferred embodiment aspects of the present invention, the fracture parameters include stress intensity factor K and J-integral J.

According to some preferred embodiment aspects of the present invention, the J-integral J includes elastic J-integral $J_e$; determining the J-integral J and the stress intensity factor K in fracture parameters of 0.5T-CT reconstructed specimen includes the following steps:

deriving relationships between load P, elastic displacement $h_e$, and elastic strain energy $U_e$ of 0.5T-CT reconstructed specimen based on the full-process equivalent stress-strain relation curve and the stress-strain relation curve of the weld material and in conjunction with energy equivalence principle:

$$\begin{cases} \dfrac{U_e}{U_e^*} = \begin{cases} (\dfrac{h_e}{h^*})^2 \\[2mm] (\dfrac{P}{P_e^*})^2 \end{cases} \\[4mm] \dfrac{P}{P_e^*} = \dfrac{h_e}{h^*} \end{cases} \qquad (1)$$

wherein, $U_e^*$ represents characteristic elastic strain energy, $U_e^* = k_0 E V^*/2$ ; $P_e^*$ represents characteristic

elastic load, $P_e{}^*=k_0EA^*$; $V^*$ represents characteristic volume, $V^*=A^*h^*$; $h^*$ represents characteristic displacement of 0.5T-CT reconstructed specimen; $A^*$ represents characteristic area of 0.5T-CT reconstructed specimen; P represents load; $h_e$ represents elastic displacement, $U_e$ represents elastic strain energy;

from formula (1), relationship between strain energy $U_e$ and load P is obtained:

$$U_e = \frac{P^2}{2Ek_0}\frac{h^*}{A^*} \qquad\qquad (2)$$

combining with energy definition formula $J = -(\frac{\partial U}{B\partial a})$ of the J-integral J to obtain:

$$J = \frac{P^2}{2BEk_0}\frac{\partial}{\partial a}\left(\frac{h^*}{A^*}\right) \qquad\qquad (3)$$

wherein, U represents crack tip energy, B represents thickness of 0.5T-CT reconstructed specimen, $a$ represents crack length, P represents load, $k_0$ represents undetermined coefficient, E represents elastic modulus of material; material includes parent material and/or weld material;

the elastic J-integral $J_e$ is equal to energy G and can be obtained through conversion from the stress intensity factor K, the elastic J-integral $J_e$ is related to the stress intensity factor K as:

$$G = J_e = \frac{K^2}{E'} \qquad\qquad (4)$$

wherein, $E'$ represents equivalent elastic modulus of material; $J_e$ represents elastic J-integral J; K represents stress intensity factor; G represents energy;

according to the relationship between the elastic J-integral $J_e$ and the stress intensity factor K, obtaining the calculation formula of stress intensity factor K:

$$K = \sqrt{\frac{1}{k_0}\frac{P^2E'}{2BE}\frac{\partial}{\partial a}\left(\frac{h^*}{A^*}\right)} \qquad\qquad (5)$$

establishing finite element model of 0.5T-CT reconstructed specimen, performing elastic finite element analysis of 0.5T-CT reconstructed specimen to extract load and displacement data, calibrating the undetermined coefficient $k_0$ in formulas (3) and (5), thereby determining the formulas (3) and (5);

performing calculation according to the determined formulas (3) and (5) to obtain the J-integral J and the stress intensity factor K.

According to some preferred embodiment aspects of the present invention, J-integral J includes purely plastic J-integral $J_p$; determining the purely plastic J-integral $J_p$ in fracture parameters of 0.5T-CT reconstructed specimen includes the following steps:

deriving relationships between load P, displacement h, and purely plastic deformation energy $U_p$ of 0.5T-CT reconstructed specimen according to energy equivalence principle:

$$\begin{cases} \dfrac{U_p}{U_p^*} = \begin{cases} (\dfrac{h_p}{h^*})^{m_p+1} \\[2mm] (\dfrac{P}{P_p^*})^{1/m_p+1} \end{cases} \\[4mm] \dfrac{P}{P_p^*} = (\dfrac{h_p}{h^*})^{m_p} \end{cases} \tag{6}$$

wherein, characteristic plastic strain energy $U_p^*$, characteristic load $P_p^*$, and characteristic exponent $m_p$ may be respectively expressed as:

$$\begin{cases} U_p^* = \dfrac{NK_RV^*}{N+1}k_1k_3^{1+1/N} \\[2mm] m_p = \dfrac{k_4}{N} + k_4 + k_2 - 1 \\[2mm] P_p^* = \dfrac{(1+m_p)NK_RV^*}{(N+1)h^*}k_1k_3^{1+1/N} \end{cases} \tag{7}$$

wherein, $k_1$ represents a first undetermined coefficient; $k_2$ represents a second undetermined coefficient; $k_3$ represents a third undetermined coefficient; $k_4$ represents a forth undetermined coefficient; the first undetermined coefficient, the second undetermined coefficient, the third undetermined coefficient and the forth undetermined coefficient may be obtained through finite element analysis; $K_R$ represents material coefficient; N represents material exponent; $V^*$ represents characteristic volume of specimen, $V^* = h^*A^*$; $h^*$ represents characteristic displacement of specimen; $A^*$ represents characteristic area of specimen;
for 0.5T-CT reconstructed specimen, assuming:

$$\begin{cases} A^* = WB(1-\dfrac{a}{W})^m \\[2mm] h^* = W \end{cases} \tag{8}$$

wherein, W represents width of 0.5T-CT reconstructed specimen; B represents thickness of 0.5T-CT reconstructed specimen, $a$ represents crack length of 0.5T-CT reconstructed specimen; m represents effective volume reduction parameter associated with crack length of 0.5T-CT reconstructed specimen;
substituting into formulas (6) and (7) to obtain relationship between purely plastic deformation energy $U_p$ and load P:

$$U_p = W^2B(1-\dfrac{a}{W})^m \dfrac{NK_R}{N+1}k_1k_3^{1+1/N}(\dfrac{P}{P_p^*})^{1/m_p+1} \tag{9}$$

combining with energy definition formula $J = -(\dfrac{\partial U}{B\partial a})$ of the J-integral J, to obtain calculation formula for purely plastic J-integral $J_p$ of specimen:

$$J_{\mathrm{p}} = (1 - \frac{a}{W})^{m-1} Wm \frac{NK_R}{N+1} k_1 k_3^{1+1/N} (\frac{P}{P_{\mathrm{p}}^*})^{1+\frac{1}{m_{\mathrm{p}}}}$$

$$(10)$$

inputting material tensile mechanical parameters during the pre-processing of the finite element software, calculating load displacement curves under different a/W conditions, obtaining parameter m after geometric independence processing (P/A*-h/h*); performing purely plastic calculation on original specimen according to formula (6), to obtain $P_{\mathrm{p}}^*$ and $m_{\mathrm{p}}$ under different stress hardening levels, and then combining with formula (7) to calibrate, to obtain the first undetermined coefficient, the second undetermined coefficient, the third undetermined coefficient and the forth undetermined coefficient, thereby determining formula (10) ;
calculating purely plastic J-integral $J_{\mathrm{p}}$ by determined formula (10).

According to some preferred embodiment aspects of the present invention, obtaining stress-strain relationship data of weld material through indentation method, inputting full-process stress-strain data of the parent material and stress-strain relationship data of the weld material at different temperatures into finite element model of 0.5T-CT reconstructed specimen containing weld for calculation, thereby obtaining finite element calculation to obtain load-displacement curve and J-integral J considering difference in material properties;

analyzing proportional relationship between J-integral J and $J_{\text{standard specimen}}$-integral calculated by the standard formula, and calibrating proportional coefficient $\beta$ in formula (11);
obtaining calculation formula for J-integral J of fracture parameters based on formula (11), to obtain J-integral J of the fracture parameter:

$$\begin{cases} J_{\text{reconstructed specimen}} = \beta J_{\text{standard specimen}} \\ J_{\text{standard specimen}} = \left[ \frac{F}{(BB_N W)^{0.5}} \times g_2(\frac{a_0}{W}) \right]^2 \left[ \frac{(1-v)^2}{E} \right] + \frac{\eta_P U_P}{B_N(W - a_0)} \end{cases} \qquad (11)$$

wherein,

$$g_2(\frac{a_0}{W}) = \frac{(2 + \frac{a}{W}) \left[ 0.886 + 4.64 \frac{a}{W} - 13.32(\frac{a}{W})^2 + 14.72(\frac{a}{W})^3 - 5.6(\frac{a}{W})^4 \right]}{(1 - \frac{a}{W})^{1.5}} \quad , \quad \text{J}$$

represents crack tip J-integral of 0.5T-CT reconstructed specimen; $J_{\text{standard specimen}}$ represents crack tip J-integral calculated by standard formula for parent material; $\beta$ represents proportional coefficient, F represents loading force, B represents thickness of 0.5T-CT reconstructed specimen, $B_N$ represents net thickness of 0.5T-CT reconstructed specimen, a represents crack length of 0.5T-CT reconstructed specimen; W represents crack width of 0.5T-CT reconstructed specimen; E represents equivalent elastic modulus, v represents Poisson's ratio, $\eta_p$ represents plastic factor, $U_p$ represents plastic deformation energy of 0.5T-CT reconstructed specimen loaded, $a_0$ represents initial crack length of 0.5T-CT reconstructed specimen.

**BENEFICIAL EFFECT OF THE INVENTION**

Compared with the prior art, the present invention has the following beneficial effects: the testing method for obtaining material fracture property based on 0.5T-CT specimen reconstruction technology of the present invention, through the full-process equivalent stress-strain curve test of the material at different temperatures, combined with the finite element assisted testing technology to obtain the distribution law of the plastic zone at the crack tip, the reusable range of the residual specimen after the fracture test of 0.5T-CT specimen is accurately determined, 0.5T-CT reconstructed specimen is prepared by welding; based on the fracture mechanical principle and the elastic-plastic finite element assisted testing method, the calculation formula of the fracture parameters of 0.5T-CT reconstructed specimen is determined, which can effectively obtain the fracture property of 0.5T-CT reconstructed specimen, the fracture test results of the reconstructed specimen and the parent material are relatively consistent, and the material utilization rate can be effectively increased by 3 times. The testing method of the present invention is simple and the test result is accurate.

## BRIEF DESCRIPTION OF THE DRAWINGS

To more clearly explain the technical solutions of the embodiments of the invention, drawings used for describing the embodiments of the invention will be briefly introduced below. Obviously, the drawings in the following description merely illustrate some embodiments of the invention, and those ordinarily skilled in the art can obtain other drawings according to the following ones without creative labor.

FIG. 1 is a structural schematic diagram of a 0.5T-CT specimen in a preferred embodiment of the present invention;

FIG. 2 is a welding schematic diagram of a welding reconstructed specimen in a preferred embodiment of the present invention;

FIG. 3 is a structural schematic diagram of a funnel specimen in a preferred embodiment of the present invention;

FIG. 4 is a full-process equivalent stress-strain relation curve of the material at -20°C in a preferred embodiment of the present invention;

FIG. 5 is a finite element mesh model of a 0.5T-CT original specimen in a preferred embodiment of the present invention;

FIG. 6 is a schematic diagram of the size of the plastic zone at the crack tip of a 0.5T-CT specimen at -20°C in a preferred embodiment of the present invention;

FIG. 7 is a load-displacement diagram of a fracture test of 0.5T-CT original specimen and reconstructed specimen in a preferred embodiment of the present invention;

FIG. 8 is a finite element mesh model of a 0.5T-CT reconstructed specimen in a preferred embodiment of the present invention; and

FIG. 9 is a comparison diagram of the fracture test results of the 0.5T-CT original specimen and reconstructed specimen in a preferred embodiment of the present invention.

## DETAILED DESCRIPTION

In order to enable those skilled in the art to better understand the technical solution of the present invention, the technical solution in the embodiments of the present invention will be clearly and completely described below in conjunction with the drawings in the embodiments of the present invention. Obviously, the described embodiments are only embodiments of a part of the present invention, rather than all embodiments. Based on the embodiments of the present invention, all other embodiments obtained by ordinary technicians in this field without making any creative labor should fall within the scope of protection of the present invention.

The testing method for obtaining material fracture property based on 0.5T-CT specimen reconstruction technology of the present invention, includes four parts: material fracture property test based on 0.5T-CT original specimen, obtaining the full-process equivalent stress-strain curve (of parent material), determining the range of the material available for preparing reconstructed specimen from 0.5T-CT original specimen, and material fracture property test technology based on 0.5T-CT reconstructed specimen. 0.5T-CT represents compact tensile.

Specifically, in this embodiment, the testing method for obtaining material fracture property based on 0.5T-CT specimen reconstruction technology, includes the following steps:

Step (a), preparing a 0.5T-CT original specimen from parent material, conducting fracture property test to obtain tested 0.5T-CT specimen remnant.

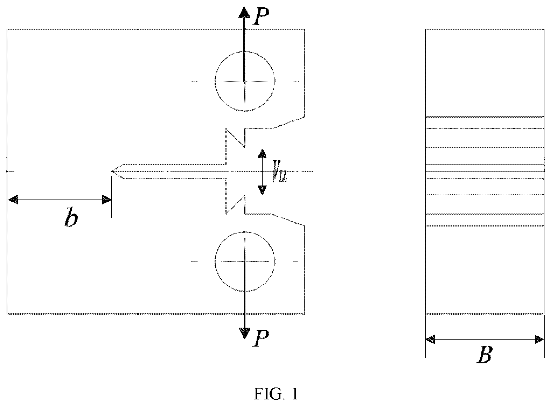

A fracture toughness 0.5T-CT original specimen is prepared for researching material, and the loading and structural diagram is shown in FIG. 1, wherein P is loading load, $V_{LL}$ is loading line displacement of the 0.5T-CT specimen, B is thickness of the specimen, and b is remaining ligament length. The left side of FIG. 1 shows main view of the structure and the right side of FIG. 1 shows left view of the structure.

Step (b), performing testing analysis on the full-process equivalent stress-strain relation curve of proportional stretching-yielding-hardening-necking-fracture of the parent material to determine the full-process equivalent stress-strain relation curve.

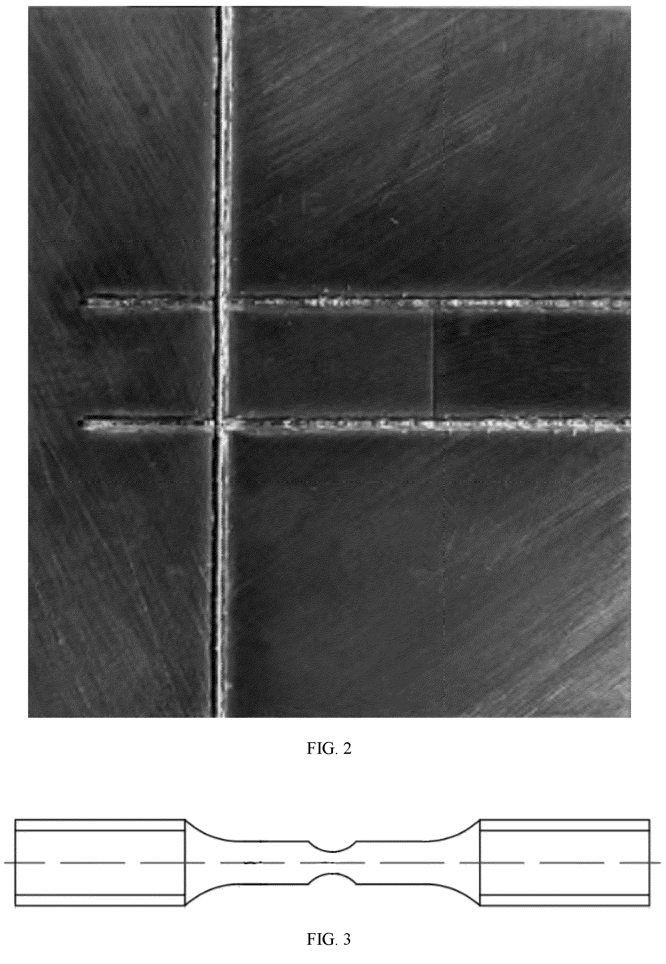

The full-process equivalent stress-strain curve test specimen of the parent material is a funnel round bar specimen (as shown in FIG. 3), which needs to combine with auxiliary finite element iterative analysis method, until the load-displacement relationship of the standard tensile specimen calculated based on the full-process equivalent stress-strain curve of the finite element input basically coincides with the tensile load-displacement curve obtained by the test, and then the full-process stress-strain curve of the specimen until breakage is obtained, and the tensile test of at least three valid specimens is completed.

The proportional stretching-yielding-hardening-necking-fracture is the whole process of the full-process equivalent stress-strain.

Specifically, in this embodiment, the stress-strain relationship of the material obtained based on uniaxial tensile test is first input into the finite element as an initial constitutive relationship, and the load-displacement relationship of the funnel specimen is calculated, and it is iterated with the load-displacement relationship of the funnel specimen obtained in the test; the input stress-strain relationship is further updated until the load-displacement relationship of the funnel specimen obtained based on the finite element calculation basically coincides with the load-displacement relationship obtained in the test, at which time the input stress-strain relationship is the full-process equivalent stress-strain relationship of the material.

In some executable embodiments, during testing analysis of the full-process equivalent stress-strain relation curve of parent material, the full-process equivalent stress-strain relation curve is iterated combined with finite element iterative analysis method, until the tensile specimen load-displacement curve obtained through the full-process equivalent stress-strain relation curve combined with finite element iterative analysis method coincides with the curve obtained by tensile test, thereby determining the full-process equivalent stress-strain curve.

Step (c), calculating size of plastic zone at crack tip of the original specimen to determine the range of the material available for preparing reconstructed specimen.

Specifically, during calculating size of plastic zone at crack tip of 0.5T-CT original specimen, the obtained full-process equivalent stress-strain curve of the parent material is input as constitutive relationship of the material. When determining the range of the material available for preparing reconstructed specimen, the full-process equivalent stress-strain curve of the parent material obtained through finite element iterative analysis method is used to calculate precise position and size of non-plastic deformation zones for preparing reconstructed specimen.

In some embodiments, prior to step (c) further includes performing fracture toughness test on 0.5T-CT original specimen with fracture toughness.

Specifically, the fracture toughness test on the surface of 0.5T-CT specimen is carried out in accordance with GB/T21143-2014, and the real-time crack length of the specimen is measured using the load separation method recommended in Appendix J.

Step (d), cutting non-plastic deformation zones (the area outside the plastic zone at crack tip) on both sides of the specimen remnant to form reusable material, performing specimen reconstruction with the reusable material and auxiliary material through welding to obtain 0.5T-CT reconstructed specimen.

The welding is electron beam welding, and reconstruction specimen is performed with reference to the welding method shown in FIG. 2. There are three welds in the welding method in FIG. 2, one in the vertical direction and two in the horizontal direction. On the right side of the vertical weld and between the two horizontal welds, there are reusable material and auxiliary material, the reusable material is closer to the vertical weld and the auxiliary material is located on the right side of the reusable material. Except for reusable material here, all other spaces are auxiliary materials. And there is no welding between the reusable material and the auxiliary material on its right side between the two horizontal welds. By the welding method in FIG. 2, the arc initiation point during the welding process is located outside reusable material area, which avoids the effect of residual stress on the specimen.

In some other executable embodiments, the total width of the weld and the heat-affected zone is small, not exceeding 3 mm. The mechanical properties of the auxiliary material and the reusable material are approximate, preferably to the parent material.

After performing welding reconstruction on the auxiliary material and the reusable material as shown in FIG. 2, a 0.5T-CT reconstructed specimen is prepared according to the structure in FIG. 1, so that part of initial cracks and tips are located on the reusable material. This allows two or more specimens to be reconstructed from the material in the non-plastic deformation zone, and improves the material utilization rate by three times or more.

Step (e), conducting testing analysis of stress-strain relation curve on weld material to obtain stress-strain relation curve of weld material.

Specifically, the weld material is the material of the weld formed by welding the auxiliary material and the reusable material. Typically, it is a mixture of the auxiliary material and the reusable material formed during welding.

In this embodiment, the welding parameters are: the acceleration voltage is 150 kV, the focusing current is 1300 mA, the welding current is 10-25 mA, and the welding speed is 1000 mm/min. In some other embodiments, the welding parameters are preferred: acceleration voltage is 140-160 kV, focusing current is 1200-1400 mA; welding current is 10-25 mA; welding speed is 900-1100 mm/min. Through the welding method and corresponding welding parameters in FIG. 2, the range of the heat-affected zone is reduced, the welding residual stress is reduced, and the stress-strain field at the crack tip is minimally affected by welding.

Step (f), determining fracture parameters of 0.5T-CT reconstructed specimen based on the full-process equivalent stress-strain relation curve of the parent material and the stress-strain relation curve of weld material.

The fracture parameters include stress intensity factor K and J-integral J. With the full-process equivalent stress-strain curve of the material obtained in step (b) is input as an initial constitutive relationship, the coefficients of calculation formulas for the fracture parameters of the 0.5T-CT reconstructed specimen are determined based on the fracture mechanical theory and elastic-plastic finite element assisted analysis technology, so that the calculation of the fracture parameters at the crack tip is accurate and reliable, eliminating the influence of welding on the reconstructed specimen.

Further, the J-integral J includes an elastic J-integral $J_e$ and a purely plastic J-integral $J_p$. According to the application scenario and the material, the fracture parameters may include only the stress intensity factor K or include the elastic J-integral $J_e$ and the stress intensity factor or include the purely plastic J-integral $J_p$ or include all three.

In some executable embodiments, the J-integral J includes elastic J-integral $J_e$; determining the J-integral J and the stress intensity factor K in fracture parameters of 0.5T-CT reconstructed specimen includes the following steps:

deriving relationships between load P, elastic displacement $h_e$, and elastic strain energy $U_e$ of 0.5T-CT reconstructed specimen based on the full-process equivalent stress-strain relation curve of the parent material and the stress-strain relation curve of the weld material and in conjunction with energy equivalence principle:

$$\begin{cases} \dfrac{U_e}{U_e^*} = \begin{cases} (\dfrac{h_e}{h^*})^2 \\[2mm] (\dfrac{P}{P_e^*})^2 \end{cases} \\[4mm] \dfrac{P}{P_e^*} = \dfrac{h_e}{h^*} \end{cases} \tag{1}$$

wherein, $U_e^*$ represents characteristic elastic strain energy, $U_e^* = k_0 EV^*/2$ ; $P_e^*$ represents characteristic elastic load, $P_e^* = k_0 EA^*$; $V^*$ represents characteristic volume, $V^* = A^* h^*$; $h^*$ represents characteristic displacement of 0.5T-CT reconstructed specimen; $A^*$ represents characteristic area of 0.5T-CT reconstructed specimen; P represents load; $h_e$ represents elastic displacement, $U_e$ represents elastic strain energy.

From formula (1), relationship between strain energy $U_e$ and load P is obtained:

$$U_e = \frac{P^2}{2Ek_0} \frac{h^*}{A^*} \tag{2}$$

combining with energy definition formula $J = -(\dfrac{\partial U}{B\partial a})$ of the J-integral J to obtain:

$$J = \frac{P^2}{2BEk_0} \frac{\partial}{\partial a}\left(\frac{h^*}{A^*}\right) \tag{3}$$

wherein, U represents crack tip energy, B represents thickness of 0.5T-CT reconstructed specimen, *a* represents crack length, P represents load, $k_0$ represents undetermined coefficient, E represents elastic modulus of material; material includes parent material and/or weld material;

the elastic J-integral $J_e$ representing the elastic part of the J-integral J is equal to energy G and can be obtained through conversion from the stress intensity factor K, the elastic J-integral $J_e$ is related to the stress intensity factor K as:

$$G = J_e = \frac{K^2}{E'} \qquad (4)$$

Further, the stress intensity factor K is stress intensity factor.

Wherein, $E'$ represents equivalent elastic modulus of material; $J_e$ represents elastic J-integral J; K represents stress intensity factor; G represents energy.

Further, obtaining the calculation formula of stress intensity factor K of 0.5T-CT reconstructed specimen:

$$K = \sqrt{\frac{1}{k_0} \frac{P^2 E'}{2BE} \frac{\partial}{\partial a}\left(\frac{h^*}{A^*}\right)} \qquad (5)$$

establishing finite element model of reconstructed specimen, performing elastic finite element analysis of reconstructed specimen to extract load and displacement data, calibrating the undetermined coefficient in formula (1), thereby obtaining the expression of the stress intensity factor K of the 0.5T-CT restructured specimen. Performing calculation utilizing formula (5) to obtain the stress intensity factor K of the 0.5T-CT restructured specimen.

Further, performing calculation utilizing formula (3) to obtain the elastic J-integral $J_e$ of the 0.5T-CT restructured specimen.

J-integral J inclu1des purely plastic J-integral $J_p$; determining the purely plastic J-integral $J_p$ in fracture parameters of 0.5T-CT reconstructed specimen includes the following steps:

deriving relationships between load P, displacement h, and purely plastic deformation energy $U_p$ of 0.5T-CT reconstructed specimen according to energy equivalence principle:

$$\begin{cases} \dfrac{U_p}{U_p^*} = \begin{cases} (\dfrac{h_p}{h^*})^{m_p+1} \\ (\dfrac{P}{P_p^*})^{1/m_p+1} \end{cases} \\ \dfrac{P}{P_p^*} = (\dfrac{h_p}{h^*})^{m_p} \end{cases} \qquad (6)$$

wherein, characteristic plastic strain energy $U_p^*$, characteristic load $P_p^*$, and characteristic exponent $m_p$ may be respectively expressed as:

$$\begin{cases} U_p^* = \dfrac{NK_R V^*}{N+1} k_1 k_3^{1+1/N} \\ m_p = \dfrac{k_4}{N} + k_4 + k_2 - 1 \\ P_p^* = \dfrac{(1+m_p)NK_R V^*}{(N+1)h^*} k_1 k_3^{1+1/N} \end{cases} \qquad (7)$$

wherein, $k_1$ represents a first undetermined coefficient; $k_2$ represents a second undetermined coefficient; $k_3$

represents a third undetermined coefficient; $k_4$ represents a forth undetermined coefficient; the first undetermined coefficient, the second undetermined coefficient, the third undetermined coefficient and the forth undetermined coefficient may be obtained through finite element analysis; $K_R$ represents material coefficient; N represents material exponent; $V^*$ represents characteristic volume of specimen, $V^* = h^*A^*$, $h^*$ represents characteristic displacement of specimen, $A^*$ represents characteristic area of specimen, W and B represents width and thickness of specimen respectively, m represents effective volume reduction parameter associated with crack length $a$ of specimen.

For 0.5T-CT reconstructed specimen, assuming:

$$\begin{cases} A^* = WB(1-\dfrac{a}{W})^m \\ h^* = W \end{cases} \qquad (8)$$

wherein, W represents width of 0.5T-CT reconstructed specimen; B represents thickness of 0.5T-CT reconstructed specimen, $a$ represents crack length of 0.5T-CT reconstructed specimen; m represents effective volume reduction parameter associated with crack length of 0.5T-CT reconstructed specimen.

Substituting into formulas (6) and (7) to obtain relationship between purely plastic deformation energy $U_p$ and load P:

$$U_{\mathrm{p}} = W^2 B(1-\frac{a}{W})^m \frac{NK_R}{N+1} k_1 k_3^{1+1/N} (\frac{P}{P_{\mathrm{p}}^*})^{1/m_{\mathrm{p}}+1} \qquad (9)$$

Combining with energy definition formula $J = -(\dfrac{\partial U}{B\partial a})$ of the J-integral J, to obtain calculation formula for purely plastic J-integral $J_p$ of specimen:

$$J_{\mathrm{p}} = (1-\frac{a}{W})^{m-1} Wm \frac{NK_R}{N+1} k_1 k_3^{1+1/N} (\frac{P}{P_{\mathrm{p}}^*})^{1+\frac{1}{m_{\mathrm{p}}}} \qquad (10)$$

Inputting material tensile mechanical parameters during the pre-processing of the finite element software, calculating load displacement curves under different a/W conditions, obtaining parameter m after geometric independence processing (P/A*-h/h*); performing purely plastic calculation on specimen according to formula (6), to obtain $P_p^*$ and $m_p$ under different stress hardening levels, and then combining with formula (7) to calibrate, to obtain the first undetermined coefficient, the second undetermined coefficient, the third undetermined coefficient and the forth undetermined coefficient, thereby determining formula (10).

Specifically, the material tensile mechanical parameters include hardness, yield, strength, and fracture. According to the need to calculate J formula, one or more of parameters can be selected to be input into the finite element software prior to processing, to participate in the finite element calculation

Using formula (10) after determining the first, second, third, and fourth undetermined coefficients in combination with the other physical parameters collected, the purely plastic J-integral $J_p$ can be obtained.

In some executable embodiments, obtaining stress-strain relationship data of weld material through indentation method, inputting full-process stress-strain data of the parent material and stress-strain relationship data of the weld material at different temperatures into finite element model of 0.5T-CT reconstructed specimen containing weld for calculation, thereby obtaining finite element calculation to obtain load-displacement curve and J-integral J considering difference in material properties.

Analyzing proportional relationship between J-integral J of the fracture parameters and $J_{standard\ specimen}$-integral calculated by the standard formula, and calibrating proportional coefficient $\beta$ in formula (11);

obtaining calculation formula for J-integral J of fracture parameters based on formula (11), to obtain J-integral J of the

fracture parameter:

$$\begin{cases} J_{\text{reconstructed specimen}} = \beta J_{\text{standard specimen}} \\ J_{\text{standard specimen}} = \left[ \dfrac{F}{(BB_N W)^{0.5}} \times g_2(\dfrac{a_0}{W}) \right]^2 \left[ \dfrac{(1-v)^2}{E} \right] + \dfrac{\eta_P U_P}{B_N(W-a_0)} \end{cases} \tag{11}$$

wherein,

$$g_2(\frac{a_0}{W}) = \frac{(2+\dfrac{a}{W})\left[ 0.886 + 4.64\dfrac{a}{W} - 13.32(\dfrac{a}{W})^2 + 14.72(\dfrac{a}{W})^3 - 5.6(\dfrac{a}{W})^4 \right]}{(1-\dfrac{a}{W})^{1.5}} \quad, \quad J$$

represents crack tip J-integral of reconstructed specimen; $J_{\text{standard specimen}}$ represents crack tip J-integral of standard specimen of parent material; $\beta$ represents proportional coefficient, F represents loading force, B represents thickness of 0.5T-CT reconstructed specimen, $B_N$ represents net thickness of 0.5T-CT reconstructed specimen, $a$ and W represent crack length and width of specimen respectively; E represents equivalent elastic modulus, v represents Poisson's ratio, $\eta_p$ represents plastic factor, $U_p$ represents plastic deformation energy of specimen loaded, $a_0$ represents initial crack length of specimen.

Further, the standard formula is the formula corresponding to formula (11) $J_{\text{standard specimen}}$. The standard specimen of parent material includes original specimen.

Step (g), performing fracture toughness test on 0.5T-CT reconstructed specimen based on the determined fracture parameters of 0.5T-CT reconstructed specimen, to obtain fracture property. The test results are verified to be representative of fracture property of the original material .

To conduct fracture toughness test of 0.5T-CT reconstructed specimen, the fracture toughness test method used for the reconstructed specimen should fully consider the influence of material heterogeneity in different areas of the reconstructed specimen welds, and the reliability of the crack length measurement method during the test should be verified. Therefore, it is needed to determine the fracture property parameters of the reconstructed specimen based on the calculation formulas of fracture parameters applicable to reconstructed specimen determined in step (f). The fracture parameters include stress intensity factor K and J-integral J, specifically, they are determined according to the test needs.

In an executable embodiment of a testing method for obtaining material fracture property based on 0.5T-CT specimen reconstruction technology, including the following steps:

Step (1), material fracture property test based on 0.5T-CT original specimen.

For metal materials, a 0.5T-CT specimen is processed according to the structure shown in FIG. 1, and the J-integral J-$\Delta a$ curve of the material at -20°C is obtained with reference to GB/T21143-2014 standard.

Step (2), obtaining the full-process equivalent stress-strain curve of the parent material.

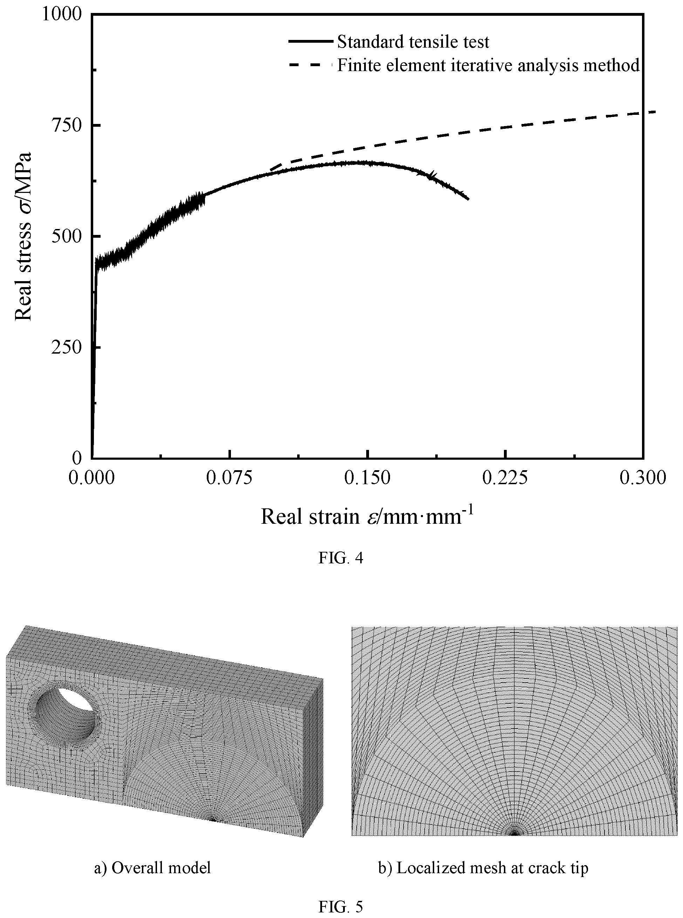

According to the structure shown in FIG. 3, a funnel specimen is processed, and tensile test is carried out at -20°C, combined with the tensile test of the standard round bar specimen, and the auxiliary finite element iterative analysis is used, to obtain the full-process stress-strain relation curve of the parent material until breakage at -20°C, as shown in FIG. 4.

In some other embodiments, other standard styles, such as a plate tensile specimen test, an isometric round bar tensile specimen test, etc., may be combined as needed for the scenario.

Step (3), determining of the range of material available for preparing reconstructed specimen from the 0.5T-CT original specimen.

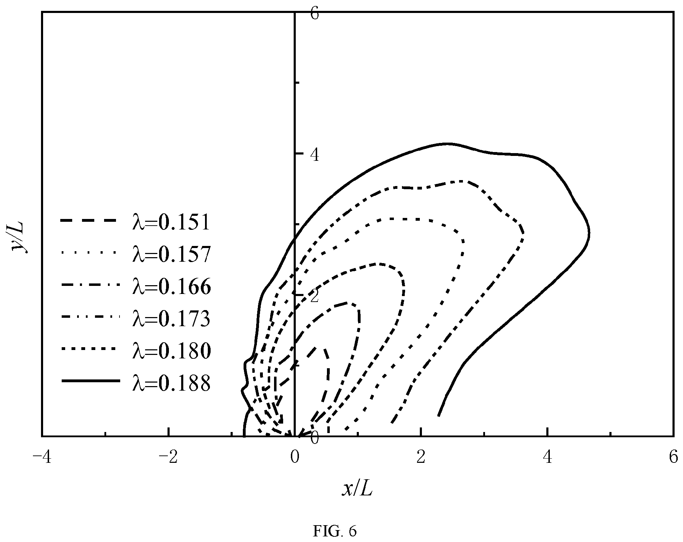

The full-process stress-strain relation curve of the parent material until breakage at -20°C obtained in step (2) is input into the finite element as constitutive relationship of the material, and the finite element model of the 0.5T-CT specimen is established as shown in FIG. 5. The size distribution of plastic zone at crack tip of 0.5T-CT specimen under different load levels is calculated, as shown in FIG. 6, the coordinate origin represents the crack tip, $\lambda = P/(\sigma_0 Bb)$, which represents the dimensionless load level, wherein P is the loading load, $\sigma_0$ is the material yield stress, B is thickness of the specimen, and b is remaining ligament length. The size of the plastic zone is calculated by the given loading load in FIG. 6, and then the range available for specimen reconstruction is determined.

Step (4), performing stress-strain relationship data test of weld material. The stress-strain relationship data of each micro-zone material of the weld is obtained through the indentation method.

Step (5), material fracture property testing technology based on 0.5T-CT reconstructed specimen.

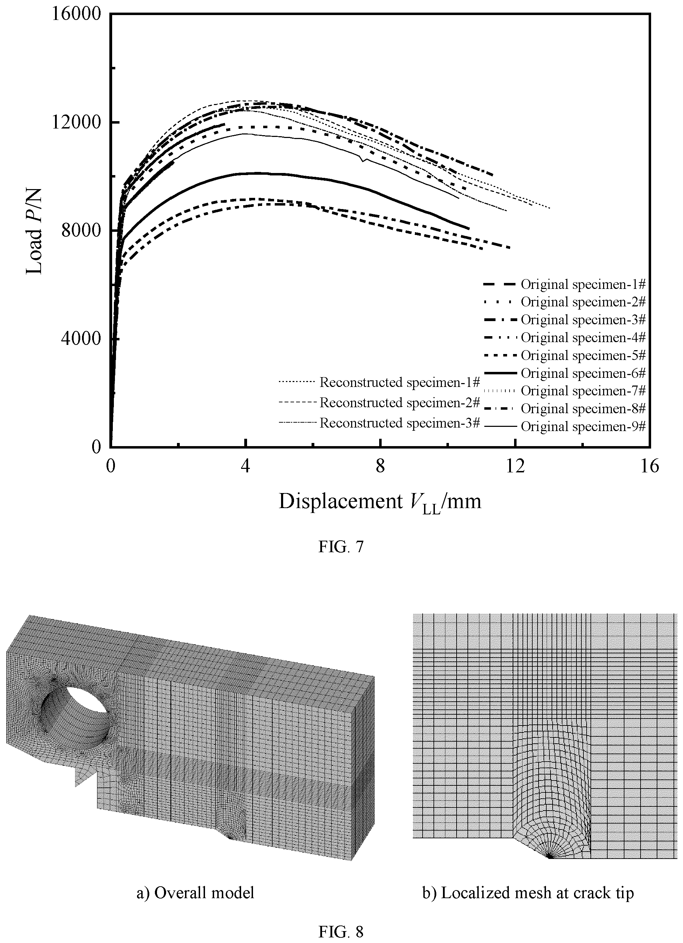

The load-displacement curve of fracture test of 0.5T-CT reconstructed specimen is collected, as shown in FIG. 7. The full-process stress-strain relation curve of material until breakage at -20°C obtained in step (2) is input into the finite element as material constitutive relationship, and a finite element mesh model of 0.5T-CT reconstructed specimen is established as shown in FIG. 8. The corresponding parameters are input to calculate and obtain the load displacement curves under different a/W conditions. The parameter m can be obtained after geometry independent processing (P/A*-h/h*). Purely plastic calculation on specimen is performed according to formula (6), to obtain $P_p^*$ and $m_p$ under different stress hardening levels, and then calibration is performed in combination with formula (7) to obtain $k_1 \sim k_4$, to obtain corresponding fracture parameters.

The proportional coefficient $\beta$ in formula (11) is obtained as 0.88 by finite element calibration, which in turn can be calculated to obtain fracture parameters of 0.5T-CT reconstructed specimen.

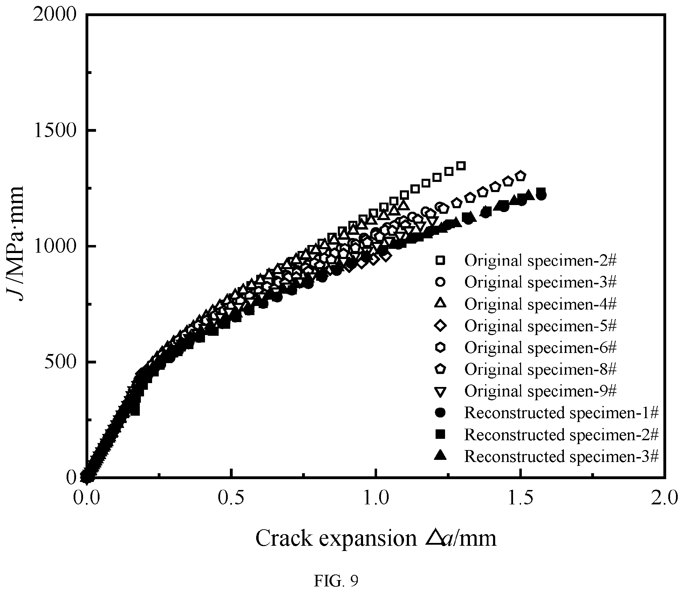

Furthermore, through tests, material J integral J-$\Delta a$ curve of 0.5T-CT reconstructed specimen is obtained. FIG. 9 shows fracture J integral J-$\Delta a$ curve of 0.5T-CT original specimen and reconstructed specimen at -20°C. It can be seen that material fracture property obtained based on 0.5T-CT reconstructed specimen can effectively characterize fracture property of the parent material.

The testing method for obtaining material fracture property based on 0.5T-CT specimen reconstruction technology of the present invention includes the following steps: (a) preparing a 0.5T-CT original specimen from parent material, conducting fracture property test to obtain tested 0.5T-CT specimen remnant; (b) performing testing analysis on the full-process equivalent stress-strain relation curve of the parent material to obtain the full-process equivalent stress-strain relation curve; (c) calculating size of plastic zone at crack tip of original specimen to determine the range of the material available for preparing reconstructed specimen; (d) cutting non-plastic deformation zones on both sides of the specimen to form reusable material, performing specimen reconstruction with the reusable material and auxiliary material through welding to obtain 0.5T-CT reconstructed specimen; (e) conducting testing analysis of stress-strain relation curve on weld material to obtain stress-strain relation curve of weld material; (f) determining fracture parameters of 0.5T-CT reconstructed specimen based on the full-process equivalent stress-strain relation curve of parent material and the stress-strain relation curve of weld material; (g) performing fracture toughness test on 0.5T-CT reconstructed specimen based on the fracture parameters to obtain fracture property of the parent material and/or the weld material. The present invention, through the full-process equivalent stress-strain curve test of the material at different temperatures, combined with the finite element assisted testing technology to obtain the distribution law of the plastic zone at the crack tip, the reusable range of the residual specimen after the fracture test of 0.5T-CT specimen is accurately determined, 0.5T-CT reconstructed specimen is prepared by welding; based on the fracture mechanical principle and the elastic-plastic finite element assisted testing method, the calculation formula of the fracture parameters of 0.5T-CT reconstructed specimen is determined, which can effectively obtain the fracture property of 0.5T-CT reconstructed specimen, the fracture test results of the parent material are relatively consistent, and the material utilization rate can be effectively increased by 3 times. The testing method of the present invention is simple and the test result is accurate.

The above embodiments are only for illustrating the technical concept and features of the present invention, and their purpose is to enable people familiar with this technology to understand the content of the present invention and implement it accordingly, and they cannot be used to limit the protection scope of the present invention. All equivalent changes or modifications made according to the spirit and essence of the present invention should be included in the protection scope of the present invention.

**Claims**

1. A testing method for obtaining material fracture property based on 0.5T-CT specimen reconstruction technology, **characterized by** comprising the following steps:

   preparing a 0.5T-CT original specimen from parent material, conducting fracture property test to obtain tested 0.5T-CT specimen remnant;
   performing testing analysis on the full-process equivalent stress-strain relation curve of proportional stretching-yielding-hardening-necking-fracture of the parent material to determine the full-process equivalent stress-strain relation curve;
   calculating size of plastic zone at crack tip of the specimen remnant to determine the range of the material available for preparing reconstructed specimen;
   cutting non-plastic deformation zones on both sides of the specimen remnant to form reusable material, performing specimen reconstruction with the reusable material and auxiliary material through welding to obtain 0.5T-CT reconstructed specimen;

conducting testing analysis of stress-strain relation curve on weld material to obtain stress-strain relation curve of weld material;

determining fracture parameters of 0.5T-CT reconstructed specimen based on the full-process equivalent stress-strain relation curve and the stress-strain relation curve of weld material;

performing fracture toughness test on 0.5T-CT reconstructed specimen based on the fracture parameters to obtain fracture property of the parent material and/or the weld material.

2. The testing method according to claim 1, **characterized in that** during testing analysis of the full-process equivalent stress-strain relation curve of parent material, the full-process equivalent stress-strain relation curve is iterated combined with finite element iterative analysis method, until the tensile specimen load-displacement curve obtained through the full-process equivalent stress-strain relation curve combined with finite element iterative analysis method coincides with the curve obtained by tensile test, thereby determining the full-process equivalent stress-strain curve.

3. The testing method according to claim 2, **characterized in that** during calculating size of plastic zone at crack tip of 0.5T-CT original specimen, the determined full-process equivalent stress-strain curve is finite element input as constitutive relationship of the parent material.

4. The testing method according to claim 2, **characterized in that** when determining the range of the material available for preparing reconstructed specimen, the full-process equivalent stress-strain curve obtained through finite element iterative analysis method is used to calculate precise position and size of non-plastic deformation zones for preparing 0.5T-CT reconstructed specimen.

5. The testing method according to claim 1, **characterized in that** the welding is electron beam welding, an arc initiation point during welding process is located outside reusable material area, a welding temperature during welding process does not exceed 300°C, and a total width of the weld and heat-affected zone does not exceed 3 mm.

6. The testing method according to claim 1, **characterized in that** the auxiliary material is identical type material as the parent material.

7. The testing method according to claim 1, **characterized in that** the fracture parameters comprise stress intensity factor K and/or J-integral J.

8. The testing method according to claim 7, **characterized in that** the J-integral J comprises elastic J-integral $J_e$; determining the J-integral J and the stress intensity factor K in fracture parameters of 0.5T-CT reconstructed specimen comprises the following steps:

deriving relationships between load P, elastic displacement $h_e$, and elastic strain energy $U_e$ of 0.5T-CT reconstructed specimen based on the full-process equivalent stress-strain relation curve and the stress-strain relation curve of the weld material and in conjunction with energy equivalence principle:

$$\begin{cases} \dfrac{U_e}{U_e^*} = \begin{cases} (\dfrac{h_e}{h^*})^2 \\ (\dfrac{P}{P_e^*})^2 \end{cases} \\ \dfrac{P}{P_e^*} = \dfrac{h_e}{h^*} \end{cases} \tag{1}$$

wherein, $U_e^*$ represents characteristic elastic strain energy, $U_e^* = k_0 E V^*/2$; $P_e^*$ represents characteristic elastic load, $P_e^* = k_0 E A^*$; $V^*$ represents characteristic volume, $V^* = A^* h^*$; $h^*$ represents characteristic displacement of 0.5T-CT reconstructed specimen; $A^*$ represents characteristic area of 0.5T-CT reconstructed specimen; P represents load; $h_e$ represents elastic displacement, $U_e$ represents elastic strain energy;

from formula (1), relationship between strain energy $U_e$ and load P is obtained:

$$U_e = \frac{P^2}{2Ek_0}\frac{h^*}{A^*} \tag{2}$$

combining with energy definition formula $J = -(\frac{\partial U}{B\partial a})$ of the J-integral J to obtain:

$$J = \frac{P^2}{2BEk_0}\frac{\partial}{\partial a}\left(\frac{h^*}{A^*}\right) \tag{3}$$

wherein, U represents crack tip energy, B represents thickness of 0.5T-CT reconstructed specimen, $a$ represents crack length, P represents load, $k_0$ represents undetermined coefficient, E represents elastic modulus of material; material comprises parent material and/or weld material;

the elastic J-integral $J_e$ is equal to energy G and can be obtained through conversion from the stress intensity factor K, the elastic J-integral $J_e$ is related to the stress intensity factor K as:

$$G = J_e = \frac{K^2}{E'} \tag{4}$$

wherein, $E'$ represents equivalent elastic modulus of material; $J_e$ represents elastic J-integral J; K represents stress intensity factor; G represents energy;

according to the relationship between the elastic J-integral $J_e$ and the stress intensity factor K, obtaining the calculation formula of stress intensity factor K:

$$K = \sqrt{\frac{1}{k_0}\frac{P^2 E'}{2BE}\frac{\partial}{\partial a}\left(\frac{h^*}{A^*}\right)} \tag{5}$$

establishing finite element model of 0.5T-CT reconstructed specimen, performing elastic finite element analysis of 0.5T-CT reconstructed specimen to extract load and displacement, calibrating the undetermined coefficient $k_0$ in formulas (3) and (5), thereby determining the formulas (3) and (5);

performing calculation according to the determined formulas (3) and (5) to obtain the J-integral J and the stress intensity factor K.

9. The testing method according to claim 7, **characterized in that** J-integral J comprises purely plastic J-integral $J_p$; determining the purely plastic J-integral $J_p$ in fracture parameters of 0.5T-CT reconstructed specimen comprises the following steps:

deriving relationships between load P, displacement h, and purely plastic deformation energy $U_p$ of 0.5T-CT reconstructed specimen according to energy equivalence principle:

$$\begin{cases} \dfrac{U_p}{U_p^*} = \begin{cases} (\dfrac{h_p}{h^*})^{m_p+1} \\ (\dfrac{P}{P_p^*})^{1/m_p+1} \end{cases} \\ \dfrac{P}{P_p^*} = (\dfrac{h_p}{h^*})^{m_p} \end{cases} \tag{6}$$

wherein, characteristic plastic strain energy $U_p^*$, characteristic load $P_p^*$, and characteristic exponent $m_p$ may be respectively expressed as:

$$\begin{cases} U_{\mathrm{p}}^{*} = \dfrac{NK_RV^{*}}{N+1}k_1 k_3^{1+1/N} \\[3mm] m_{\mathrm{p}} = \dfrac{k_4}{N}+k_4+k_2-1 \\[3mm] P_{\mathrm{p}}^{*} = \dfrac{(1+m_{\mathrm{p}})NK_RV^{*}}{(N+1)h^{*}}k_1 k_3^{1+1/N} \end{cases} \qquad (7)$$

wherein, $k_1$ represents a first undetermined coefficient; $k_2$ represents a second undetermined coefficient; $k_3$ represents a third undetermined coefficient; $k_4$ represents a forth undetermined coefficient; the first undetermined coefficient, the second undetermined coefficient, the third undetermined coefficient and the forth undetermined coefficient may be obtained through finite element analysis; $K_R$ represents material coefficient; N represents material exponent; $V^{*}$ represents characteristic volume of specimen, $V^{*}= h^{*}A^{*}$; $h^{*}$ represents characteristic displacement of specimen; $A^{*}$ represents characteristic area of specimen;

for 0.5T-CT reconstructed specimen, assuming:

$$\begin{cases} A^{*} = WB(1-\dfrac{a}{W})^{m} \\[3mm] h^{*} = W \end{cases} \qquad (8)$$

wherein, W represents width of 0.5T-CT reconstructed specimen; B represents thickness of 0.5T-CT reconstructed specimen, $a$ represents crack length of 0.5T-CT reconstructed specimen; m represents effective volume reduction parameter associated with crack length of 0.5T-CT reconstructed specimen;

substituting into formulas (6) and (7) to obtain relationship between purely plastic deformation energy $U_{\mathrm{p}}$ and load P:

$$U_{\mathrm{p}} = W^2 B(1-\frac{a}{W})^{m}\frac{NK_R}{N+1}k_1 k_3^{1+1/N}(\frac{P}{P_{\mathrm{p}}^{*}})^{1/m_{\mathrm{p}}+1} \qquad (9)$$

combining with energy definition formula $J = -(\dfrac{\partial U}{B\partial a})$ of the J-integral J, to obtain calculation formula for purely plastic J-integral $J_{\mathrm{p}}$ of 0.5T-CT reconstructed specimen:

$$J_{\mathrm{p}} = (1-\frac{a}{W})^{m-1}Wm\frac{NK_R}{N+1}k_1 k_3^{1+1/N}(\frac{P}{P_{\mathrm{p}}^{*}})^{1+\frac{1}{m_{\mathrm{p}}}} \qquad (10)$$

inputting material tensile mechanical parameters during the pre-processing of the finite element software, calculating load displacement curves under different a/W conditions, obtaining parameter m after geometry independent processing (P/A*-h/h*); performing purely plastic calculation on original specimen according to formula (6), to obtain $P_{\mathrm{p}}^{*}$ and $m_{\mathrm{p}}$ under different stress hardening levels, and then combining with formula (7) to calibrate, to obtain the first undetermined coefficient, the second undetermined coefficient, the third undetermined coefficient and the forth undetermined coefficient, thereby determining formula (10) ;

calculating purely plastic J-integral $J_{\mathrm{p}}$ by determined formula (10).

10. The testing method according to claim 7, **characterized in that** obtaining stress-strain relationship data of weld material through indentation method, inputting full-process stress-strain data of the parent material and stress-strain relationship data of the weld material at different temperatures into finite element model of 0.5T-CT reconstructed specimen containing weld for calculation, thereby obtaining finite element calculation to obtain load-displacement curve and J-integral J considering difference in material properties;

analyzing proportional relationship between J-integral J of the fracture parameters and $J_{standard\ specimen}$-integral calculated by the standard formula, and calibrating proportional coefficient β in formula (11);

obtaining calculation formula for J-integral J of fracture parameters based on formula (11), to obtain J-integral J of the fracture parameter:

$$
\begin{cases}
J_{reconstructed\ specimen} = \beta J_{standard\ specimen} \\
J_{standard\ specimen} = \left[ \dfrac{F}{(BB_N W)^{0.5}} \times g_2(\dfrac{a_0}{W}) \right]^2 \left[ \dfrac{(1-v)^2}{E} \right] + \dfrac{\eta_P U_P}{B_N(W - a_0)}
\end{cases}
\qquad (11)
$$

wherein,

$$
g_2(\frac{a_0}{W}) = \frac{(2 + \dfrac{a}{W}) \left[ 0.886 + 4.64 \dfrac{a}{W} - 13.32(\dfrac{a}{W})^2 + 14.72(\dfrac{a}{W})^3 - 5.6(\dfrac{a}{W})^4 \right]}{(1 - \dfrac{a}{W})^{1.5}} \qquad , \qquad J
$$

represents crack tip J-integral of 0.5T-CT reconstructed specimen; $J_{standard\ specimen}$ represents crack tip J-integral calculated by standard formula for parent material; β represents proportional coefficient, F represents loading force, B represents thickness of 0.5T-CT reconstructed specimen, $B_N$ represents net thickness of 0.5T-CT reconstructed specimen, a represents crack length of 0.5T-CT reconstructed specimen; W represents crack width of 0.5T-CT reconstructed specimen; E represents equivalent elastic modulus, v represents Poisson's ratio, $\eta_p$ represents plastic factor, $U_p$ represents plastic deformation energy of 0.5T-CT reconstructed specimen loaded, $a_0$ represents initial crack length of 0.5T-CT reconstructed specimen.

FIG. 1

FIG. 2

FIG. 3

FIG. 4

a) Overall model                            b) Localized mesh at crack tip

FIG. 5

FIG. 6

FIG. 7

a) Overall model                                        b) Localized mesh at crack tip

FIG. 8

FIG. 9

## INTERNATIONAL SEARCH REPORT

| International application No. |
|---|
| **PCT/CN2024/122055** |

| **A.** | **CLASSIFICATION OF SUBJECT MATTER** |
|---|---|

G01N3/08(2006.01)i; G01N3/06(2006.01)i; G01N1/28(2006.01)i

According to International Patent Classification (IPC) or to both national classification and IPC

| **B.** | **FIELDS SEARCHED** |
|---|---|

Minimum documentation searched (classification system followed by classification symbols)

IPC: G01N

Documentation searched other than minimum documentation to the extent that such documents are included in the fields searched

Electronic data base consulted during the international search (name of data base and, where practicable, search terms used)

CNABS, CNTXT, CNKI, VEN, WOTXT, USTXT, EPTXT, GBTXT, IEEE: 苏州热工研究院有限公司, 岭澳核电有限公司, 祁爽, 安英辉, 黄平, 姜冠男, 范敏郁, 方奎元, 钱王洁, 蔡可信, 王春辉, 张晏玮, 试样, 试品, 样品, 重组, 重构, 复用, 断裂, 韧性, 应力, 应变, 曲线, 尖端, 焊缝, 焊接, specimen, sample, reconstitution, recombin+, fracture, toughness, stress, strain, curve, tip, weld, solder

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 117686330 A (SUZHOU NUCLEAR POWER RESEARCH INSTITUTE CO., LTD. et al.) 12 March 2024 (2024-03-12)<br>description, paragraphs [0006]-[0116], and figures 1-9 | 1-9 |
| A | CN 103870679 A (SUZHOU NUCLEAR POWER RESEARCH INSTITUTE CO., LTD. et al.) 18 June 2014 (2014-06-18)<br>entire document | 1-10 |
| A | CN 112098208 A (SHANGHAI NUCLEAR ENGINEERING RESEARCH AND DESIGN INSTITUTE CO., LTD.) 18 December 2020 (2020-12-18)<br>entire document | 1-10 |
| A | CN 115266262 A (SUZHOU NUCLEAR POWER RESEARCH INSTITUTE CO., LTD. et al.) 01 November 2022 (2022-11-01)<br>entire document | 1-10 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 December 2024** | **10 December 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/122055**

| C. | DOCUMENTS CONSIDERED TO BE RELEVANT | |
|---|---|---|
| Category* | Citation of document, with indication, where appropriate, of the relevant passages | Relevant to claim No. |
| A | JP 2007155540 A (KYUSHU ELECTRIC POWER CO., INC. et al.) 21 June 2007 (2007-06-21)<br>        entire document | 1-10 |
| A | US 9702798 B1 (FRONTICS, INC.) 11 July 2017 (2017-07-11)<br>        entire document | 1-10 |

Form PCT/ISA/210 (second sheet) (July 2022)

**INTERNATIONAL SEARCH REPORT**
**Information on patent family members**

International application No.

**PCT/CN2024/122055**

| Patent document cited in search report | | | Publication date (day/month/year) | Patent family member(s) | | | Publication date (day/month/year) |
|---|---|---|---|---|---|---|---|
| CN | 117686330 | A | 12 March 2024 | None | | | |
| CN | 103870679 | A | 18 June 2014 | None | | | |
| CN | 112098208 | A | 18 December 2020 | None | | | |
| CN | 115266262 | A | 01 November 2022 | None | | | |
| JP | 2007155540 | A | 21 June 2007 | JP | 4676323 | B2 | 27 April 2011 |
| US | 9702798 | B1 | 11 July 2017 | KR | 101707492 | B1 | 17 February 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201410060019

- CN 202210846785